# EUROPÄISCHE PATENTANMELDUNG

(11) **EP 4 575 420 A1**
(43) Veröffentlichungstag der Anmeldung: **25.06.2025**
(21) Anmeldenummer: 23218804.5
(22) Anmeldetag: 20.12.2023
(51) Int. Cl.: G01F 1/66, G01F 15/14, G01F 15/18

(54) **DURCHFLUSSMENGENMESSER**

(71) Anmelder: Engelmann Sensor GmbH, 69168 Wiesloch-Baiertal (DE)
(72) Erfinder: Scheib, Oliver, 69168 Wiesloch-Baiertal (DE); Sulzberger, Markus, 69168 Wiesloch-Baiertal (DE); Fink, Michael, 69168 Wiesloch-Baiertal (DE)
(74) Vertreter: Durm Patentanwälte PartG mbB

(57) **Zusammenfassung**

Ein Durchflussmengenmesser zur Bestimmung der Menge einer Flüssigkeit, die durch eine Leitung fließt, umfasst ein rohrförmiges Anschlussstück 10 mit einem Einlassstutzen 12 und einem Auslassstutzen 13, welche mit der Leitung verbindbar sind. Auf das Anschlussstück 10 ist eine Messkapsel 20 aufgesetzt, welche ein Messkapselgehäuse 30 und einen Messkanal 42 hat. Dabei ist der Einlass des Messkanals 42 mit dem Einlassstutzen 12 und der Auslass des Messkanals 42 mit dem Auslassstutzen 13 des Anschlussstücks 10 verbunden, sodass das zu messende Flüssigkeitsvolumen vollständig durch den Messkanal 42 strömt. Durch den Messkanal 42 verläuft eine Ultraschall-Messstrecke 60 mit einem ersten Ultraschallwandler 50 an der Oberseite und einem zweiten Ultraschallwandler 51 mit axialem Abstand am unteren Ende. Der Messkanal 42 ist senkrecht zur Flussrichtung des Flüssigkeitsstroms durch das Anschlussstück 10 angeordnet. Dadurch wird das Messergebnis unabhängig von der Winkellage der Messkapsel 20 in Bezug auf das Anschlussstück 10.

## Beschreibung

Die Erfindung betrifft einen Durchflussmengenmesser zur Bestimmung der Menge einer Flüssigkeit, die durch eine Leitung fließt. Derartige Durchflussmengenmesser werden insbesondere in Wärmezählern verwendet, um den Verbrauch von Wärme in einer Heizungsanlage zu erfassen.

Ein solcher Durchflussmengenmesser umfasst ein rohrförmiges Anschlussstück mit einem Einlassstutzen und einem Auslassstutzen, welche mit der Leitung, durch welche das Heizungswasser fließt, verbindbar sind; ferner eine Messkapsel mit einem Messkapselgehäuse und einem Messkanal, wobei der Einlass des Messkanals mit dem Einlassstutzen und der Auslass des Messkanals mit dem Auslassstutzen des Anschlussstücks verbunden ist, sodass das zu messende Flüssigkeitsvolumen vollständig durch den Messkanal strömt; sowie eine durch den Messkanal verlaufende Ultraschall-Messstrecke mit wenigstens zwei Ultraschallwandlern, welche Ultraschallsignale in die Ultraschall-Messstrecke senden und/oder empfangen.

Im Vorlauf und im Rücklauf der Heizungsanlage wird jeweils die Temperatur des Heizungswassers gemessen. Aus der Temperaturdifferenz und des mittels des Durchflussmengenmessers erfassten Flüssigkeitsvolumens lässt sich dann die verbrauchte Wärmemenge sehr genau berechnen.

Die Rohrleitungen, in denen ein derartiger Ultraschall-Durchflussmengenmesser zum Einsatz kommt, bestehen üblicherweise aus Metall, beispielsweise Edelstahl. Das in die Rohrleitung einsetzbare Anschlussstück besteht deshalb in der Regel ebenfalls aus Metall, vorzugsweise Messing. Auch das Gehäuse der Messkapsel besteht oft aus Messing. Da Metall die Eigenschaft hat, Ultraschallsignale stark zu reflektieren, ist der eigentliche Messkanal oft in einem Messkammereinsatz ausgebildet ist, welcher in dem Messkapselgehäuse eingesetzt ist und aus Ultraschall absorbierendem Kunststoff besteht.

EP3677877A1 beschreibt einen Ultraschall-Durchflussmengenmesser mit einem Messrohr aus Kunststoff, welches in einem Metallgehäuse sitzt. Durch die Verwendung von Kunststoff als Material für das Messrohr werden unerwünschte Reflektionen an den Wänden des Metallgehäuses und eine unkontrollierte Ausbreitung eingekoppelter Schwingungen als Körperschall minimiert.

DE102021114657A1 offenbart einen Durchflussmengenmesser umfassend ein Anschlussstück mit Einlassstutzen und Auslassstutzen und eine Messkapsel mit rundem Messkapselgehäuse aus Metall. Ein Messkammereinsatz aus Kunststoff, der Ultraschall gut absorbiert, ist koaxial in dem Messkapselgehäuse angeordnet. In dem Messkammereinsatz ist ein Messkanal ausgebildet, welcher im Wesentlichen parallel zur Flussrichtung des Flüssigkeitsstroms durch das Anschlussstück verläuft. Am Anfang und am Ende des Messkanals ist jeweils ein Ultraschallwandler angeordnet. Die Außenwand des Messkammereinsatzes hat radiale Öffnungen. An der Innenwand des Messkapselgehäuses sind ebene Spiegelflächen korrespondierend so angeordnet, dass die Spiegelflächen die radialen Öffnungen des Messkammereinsatzes schließen. Diese Spiegelflächen dienen als Umlenkspiegel für die Ultraschallsignale. Der Messkammereinsatz selbst enthält keine Umlenkspiegel; dessen radiale Öffnungen bilden "Fenster", durch welche die Ultraschallsignale aus dem Messkammereinsatz austreten und auf die dahinter liegenden Spiegelflächen des Messkapselgehäuses treffen.

Bei der Konstruktion gemäß DE102021114657 besteht die Problematik in der Abdichtung der radialen Öffnungen ("Fenster") des Messkammereinsatzes gegenüber dem umgebenden Messkapselgehäuse. Ein weiterer Nachteil besteht darin, dass der horizontal angeordnete bzw. parallel zur Achse des rohrförmigen Anschlussstücks verlaufende Messkanal geometrisch zwingend einen Einlass am Anfang und einen Auslass am Ende des Messkanals haben muss. Deren Winkellage in Bezug auf das rohrförmige Anschlussstück ist nicht definiert, sondern ergibt sich beim Aufschrauben der Messkapsel auf das Gewinde des Anschlussstücks mehr oder weniger zufällig. Die undefinierte Winkellage des Messkanals in Bezug auf das Anschlussstück beeinflusst das Messergebnis nicht unerheblich und stellt somit ein technisches Problem dar.

Der Erfindung liegt somit die Aufgabe zugrunde, einen Durchflussmengenmesser mit Anschlussstück und aufsetzbarer Messkapsel so auszubilden, dass die Strömungsverhältnisse im Messkanal unabhängig von der Winkellage der Messkapsel in Bezug auf das Anschlussstück sind.

Die Erfindung beruht auf dem Prinzip eines vollständig rotationssymmetrischen Aufbaus der Messkapsel, sodass die Winkellage zwischen Messkapsel und Anschlussstück keine Rolle mehr spielt.

Bei der Lösung der gestellten Aufgabe wird ausgegangen von einem Durchflussmengenmesser gemäß dem Oberbegriff des Patentanspruchs 1. Gelöst wird die Aufgabe gemäß dem kennzeichnenden Teil des Anspruchs dadurch, dass der Messkanal senkrecht zur Flussrichtung des Flüssigkeitsstroms durch das Anschlussstück angeordnet ist. Die Achse des Messkanals erstreckt sich in Einbaulage also nicht mehr radial bzw. horizontal, sondern axial bzw. vertikal. Damit ist es strömungstechnisch egal, in welcher Winkellage die Messkapsel auf dem Anschlussstück sitzt.

Vorzugsweise hat das Messkapselgehäuse einen runden Querschnitt und ist der Messkanal koaxial zur Mittelachse des Messkapselgehäuses. Auch wenn eckige Messkapseln grundsätzlich denkbar wären, hat sich in der Praxis eine runde Bauform bewährt.

Die durch den Messkanal verlaufende Ultraschall-Messstrecke kann im einfachsten Fall mit einem einzigen Ultraschallwandler realisiert werden; dessen Ultraschallsignale können dann am Ende der Messstrecke durch einen Spiegel reflektiert und auf den (einzigen) Ultraschallwandler zurückgeworfen werden. Bevorzugt hat der Durchflussmengenmesser jedoch zwei Ultraschallwandler, nämlich einen ersten Ultraschallwandler an der Oberseite des Messkapselgehäuses und einen zweiten Ultraschallwandler mit Abstand im Bereich des unteren Endes des Messkanals. Dabei kann der erste und/oder der zweite Ultraschallwandler zentrisch angeordnet sein. Die Ultraschall-Messstrecke verläuft dann zwischen dem ersten und dem zweiten Ultraschallwandler.

Besonders vorteilhaft ist der erste Ultraschallwandler, der an der Oberseite des Messkapselgehäuses angeordnet ist, ringförmig ausgebildet. Dadurch ergibt sich ein vollständig koaxialer rotationssymmetrischer Aufbau um die zentrale Achse der Messkapsel und des Messkapselgehäuses.

Bei einer zweiten alternativen Ausführungsform des erfindungsgemäßen Durchflussmengenmessers ist am Ende des Messkanals ein Spiegelträger in Form eines Dachkantprismas angeordnet, auf dessen nach oben weisenden schrägen Flächen jeweils ein ebener Umlenkspiegel sitzt. Diese Umlenkspiegel reflektieren das von dem ersten Ultraschallwandler an der Oberseite des Messkapselgehäuses ausgesandte Ultraschallsignal in einem schrägen Winkel in Richtung der Innenwandung des Messkapselgehäuses bzw. des Messkammereinsatzes. Zwei weitere Ultraschallwandler sind im Bereich des unteren Endes des Messkanals so angeordnet, dass die von den Umlenkspiegeln reflektierten Ultraschallsignale des ersten Ultraschallwandlers auf diese beiden weiteren Ultraschallwandler treffen.

Zweckmäßig hat der Messkanal die Form eines Zylinders. Die Ultraschallwandler haben bevorzugt die Form einer runden Scheibe.

Wenn, wie üblich, das Messkapselgehäuse aus Messing oder einem anderen Metall besteht, so ist es vorteilhaft, wenn in dem Messkapselgehäuse ein zylindrischer Messkammereinsatz aus einem Kunststoff, der Ultraschall absorbiert, sitzt. Messkammereinsatz und Messkapselgehäuse sind zweckmäßig koaxial, wobei die Innenwandung des Messkapselgehäuses und die Außenwandung des Messkammereinsatzes einen ringförmigen Einlasskanal definieren.

Zwei Ausführungsbeispiele der Erfindung werden nachstehend unter Bezugnahme auf die beigefügten Abbildungen näher beschrieben. Es zeigen:
- Figur 1a: eine erste Ausführung eines Durchflussmengenmessers, in einem Vertikalschnitt;
- Figur 1b: den Durchflussmengenmesser von Fig. 1a, in einem Horizontalschnitt C-C;
- Figur 1c: den Durchflussmengenmesser von Fig. 1, in einem Horizontalschnitt D-D;
- Figur 1d: den Durchflussmengenmesser von Fig. 1, in einer perspektivischen Ansicht, aufgeschnitten;
- Figur 2a: eine zweite Ausführung eines Durchflussmengenmessers, in einem Vertikalschnitt;
- Figur 2b: den Durchflussmengenmesser von Fig. 2a, in einem Horizontalschnitt C-C;
- Figur 2c: den Durchflussmengenmesser von Fig. 2a, in einem Horizontalschnitt D-D;
- Figur 2d: den Durchflussmengenmesser von Fig. 2a, in einer perspektivischen Ansicht, teilweise aufgeschnitten.

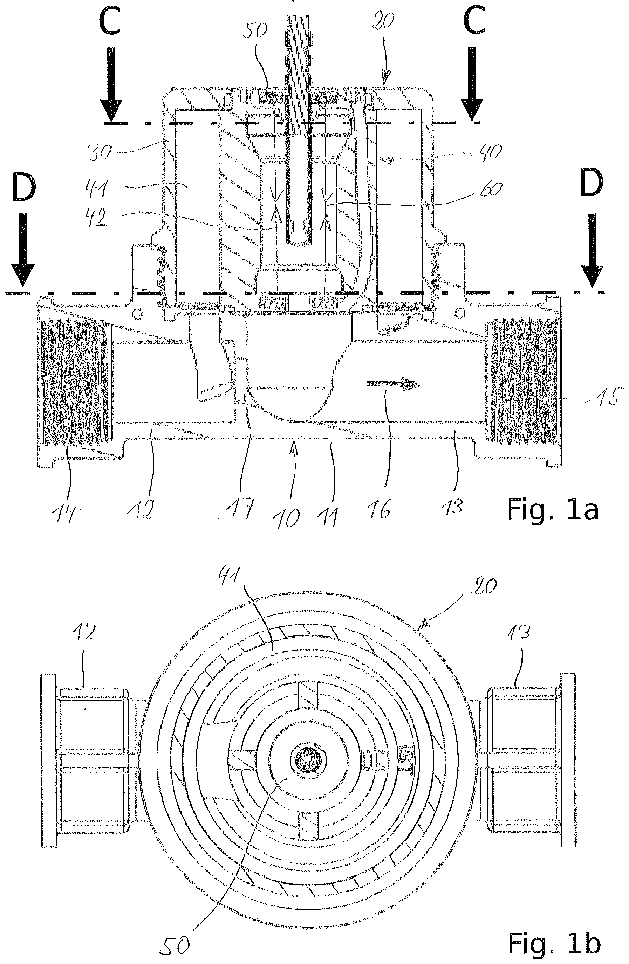

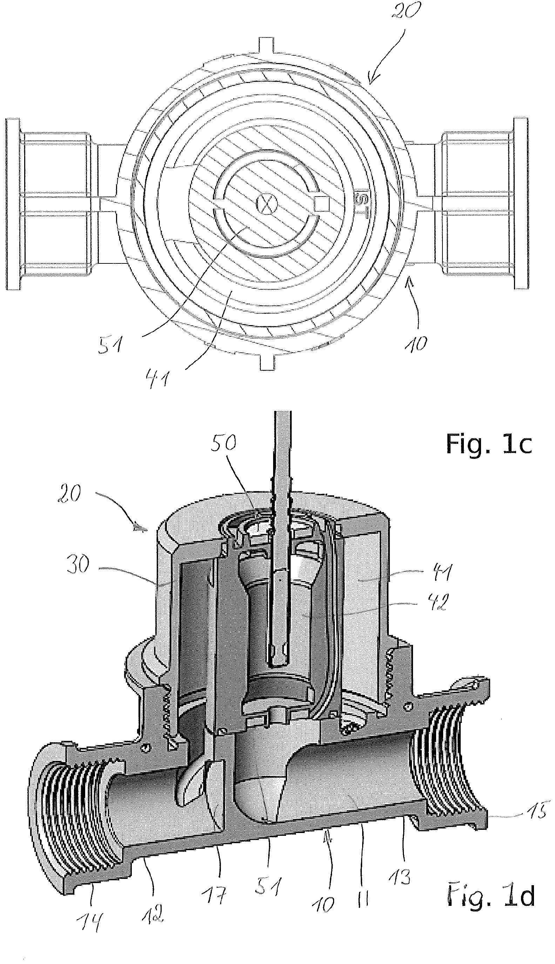

Der in den Figuren 1a - 1d dargestellte Durchflussmengenmesser umfasst ein Anschlussstück 10, dessen zentraler Teil 11 einen runden Querschnitt hat. Ein Einlassstutzen 12 und ein Auslassstutzen 13 sind rechts bzw. links angeformt. Das Anschlussstück 10 ist einstückig aus Messing gegossen. Überwurfmuttern 14, 15 dienen der festen flüssigkeitsdichten Verbindung mit einer (hier nicht dargestellten) Leitung, die von Heizungswasser durchströmt wird. Die Hauptstromrichtung des Heizungswassers ist durch den Pfeil 16 angegeben.

Auf das Anschlussstück 10 ist eine Messkapsel 20 aufgeschraubt. Diese Messkapsel 20 hat ein Messkapselgehäuse 30, das die Form eines flachen Zylinders mit ebener Oberseite hat. Das Messkapselgehäuse 30 ist ebenfalls einstückig aus Messing gegossen.

Im Inneren des Messkapselgehäuses 30 sitzt koaxial ein Messkammereinsatz 40 aus einem Kunststoff, der Ultraschall gut absorbiert. Dieser Messkammereinsatz 40 hat im Wesentlichen gleichfalls die Form eines flachen Zylinders. Dabei ist der Außendurchmesser des Messkammereinsatzes 40 kleiner als der Innendurchmesser des Messkapselgehäuses 30, sodass beide zusammen einen ringförmigen Einlasskanal 41 bilden, durch den das Heizungswasser aus dem Einlassstutzen 12 nach oben und sodann im Bereich des oberen Ende des Messkapselgehäuses 30 radial in den Messkammereinsatz 40 eintritt.

Der Messkammereinsatz 40 kann vor dem Aufschrauben des Messkapselgehäuses 30 auf das Anschlussstück 10 von unten in das noch offene Messkapselgehäuse 30 eingesetzt werden.

In dem Messkammereinsatz 40 ist ein Messkanal 42 ausgebildet, durch den das zu messende Flüssigkeitsvolumen geleitet wird.

Einlassstutzen 12 und Auslassstutzen 13 des Anschlussstücks 10 sind nicht direkt miteinander verbunden, sondern durch eine Wand 17 (vgl. Fig. 1d) voneinander getrennt. Somit strömt das gesamte Flüssigkeitsvolumen durch den Messkanal 42, bevor es am unteren Ende des Messkanals 42 austritt und von dort über den Auslassstutzen 13 in das Anschlussstück 10 und von dort in die Leitung zurückfließt.

An der Oberseite des Messkapselgehäuses 30 ist ein erster Ultraschallwandler 50 zentrisch angeordnet. Ein zweiter Ultraschallwandler 51 ist mit Abstand im Bereich des unteren Endes des Messkanals 42 angeordnet. Die Ultraschall-Messstrecke 60 verläuft zwischen den beiden Ultraschallwandlern 50 und 51. Bei diesem Ausführungsbeispiel ist nicht nur der Messkanal 42, sondern auch die Ultraschallmessstrecke 60 senkrecht zur Flussrichtung 16 des Flüssigkeitsstroms durch das Anschlussstück 10 angeordnet.

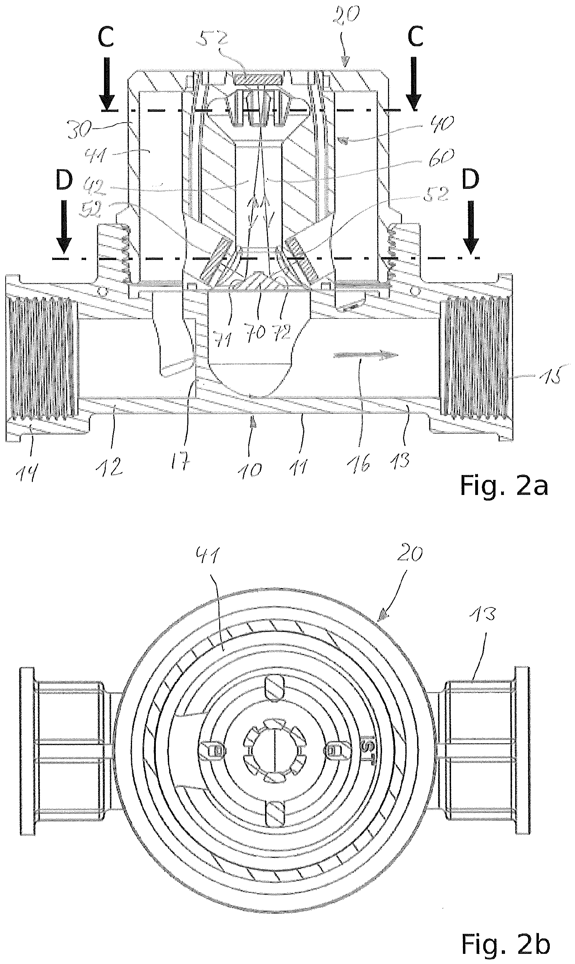

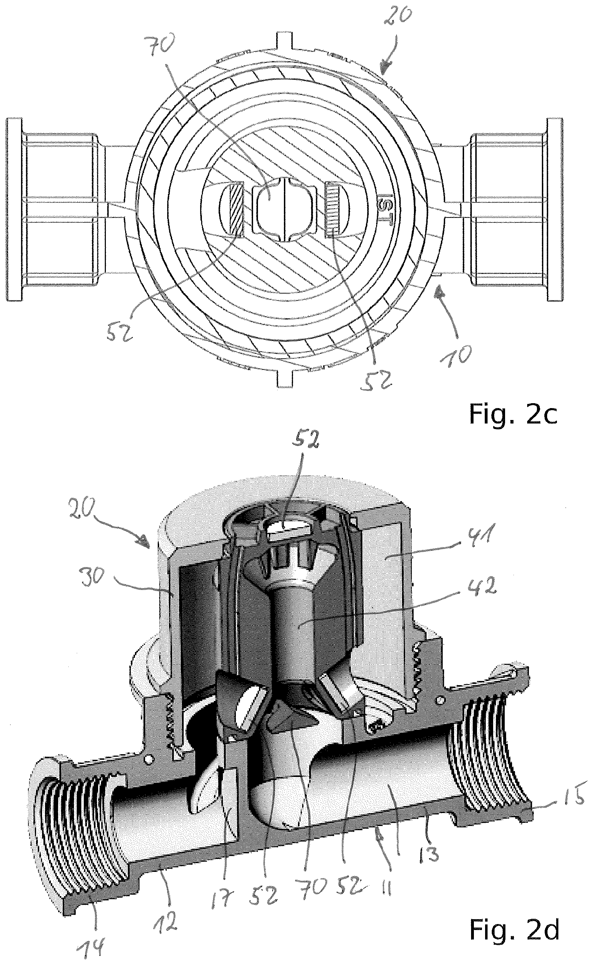

Die in den Fig. 2a - 2d dargestellte zweite Ausführungsform eines Durchflussmengenmessers hat im Prinzip genau denselben Aufbau wie der Durchflussmengenmesser gemäß Fig. 1a - 1d. Deshalb werden auch dieselben Bezugszeichen verwendet.

Der Unterschied liegt vor allem in der Art und der Anordnung der Ultraschallwandler. Hier sind insgesamt drei Ultraschallwandler 52 vorgesehen, welche jeweils die Form eines Zylinders haben. Am Ende des Messkanals 42 ist ein Spiegelträger 70 in Form eines Dachkantprismas angeordnet. Auf den nach oben weisenden schrägen Flächen des Spiegelträgers 70 sitzt jeweils ein ebener Umlenkspiegel 71 bzw. 72.

Zwei der Ultraschallwandler 52 sind an der Innenwandung des Messkammereinsatzes 40 so angeordnet, dass die von dem ersten Ultraschallwandler an der Oberseite des Messkapselgehäuses 30 angeordneten Ultraschallwandler ausgesandten Ultraschallsignale von den Umlenkspiegeln 71, 72 reflektiert werden und auf die zweiten Ultraschallwandler treffen.

Der Vorteil dieser zweiten Ausführungsform liegt in der Einfachheit der verwendeten Ultraschallwandler 52. Auch hier ist wesentlich, dass der Messkanal 42 senkrecht zur Flussrichtung des Flüssigkeitsstroms 16 durch das Anschlussstück 10 verläuft.

### Bezugszeichen

- 10: Anschlussstück
- 11: Zentraler Teil
- 12: Einlassstutzen
- 13: Auslassstutzen
- 14: Überwurfmutter (Ein)
- 15: Überwurfmutter (Aus)
- 16: Pfeil (Flussrichtung)
- 17: Wand

- 20: Messkapsel

- 30: Messkapselgehäuse

- 40: Messkammereinsatz
- 41: Einlasskanal
- 42: Messkanal

- 50: Ultraschallwandler (Ring oben)
- 51: Ultraschallwandler (Ring unten)
- 52: Ultraschallwandler (Scheibe)

- 60: Ultraschallmessstrecke

- 70: Spiegelträger
- 71: Umlenkspiegel
- 72: Umlenkspiegel

## Patentansprüche

1. Durchflussmengenmesser zur Bestimmung der Menge einer Flüssigkeit, die durch eine Leitung fließt, umfassend:
ein rohrförmiges Anschlussstück (10) mit einem Einlassstutzen (12) und einem Auslassstutzen (13), welche mit der Leitung verbindbar sind;
eine aufsetzbare Messkapsel mit einem Messkapselgehäuse (30) und einem Messkanal (42), wobei der Einlass des Messkanals (42) mit dem Einlassstutzen (12) und der Auslass des Messkanals (42) mit dem Auslassstutzen (13) des Anschlussstücks (10) verbunden ist, sodass das zu messende Flüssigkeitsvolumen durch den Messkanal (42) strömt;
eine durch den Messkanal (42) verlaufende Ultraschall-Messstrecke (60) mit wenigstens einem Ultraschallwandler (50, 51, 52), der Ultraschallsignale in die Ultraschall-Messtrecke (60) sendet und/oder empfängt;
**dadurch gekennzeichnet, dass**
der Messkanal (42) senkrecht zur Flussrichtung des Flüssigkeitsstroms durch das Anschlussstück (10) angeordnet ist.

2. Durchflussmengenmesser nach Anspruch 1, **dadurch gekennzeichnet, dass**
das Messkapselgehäuse (30) einen runden Querschnitt hat;
der Messkanal (42) koaxial zur Mittelachse des Messkapselgehäuses (30) verläuft.

3. Durchflussmengenmesser nach einem der vorhergehenden Ansprüche, **dadurch gekennzeichnet, dass**
ein erster Ultraschallwandler (50) an der Oberseite des Messkapselgehäuses (30) zentrisch angeordnet ist;
ein zweiter Ultraschallwandler (51) mit axialem Abstand im Bereich des unteren Endes des Messkanals (42) angeordnet ist;
sodass die Ultraschall-Messstrecke (60) zwischen dem ersten und dem zweiten Ultraschallwandler (50, 51) verläuft.

4. Durchflussmengenmesser nach Anspruch 4, **dadurch gekennzeichnet, dass**
der erste Ultraschallwandler (50) an der Oberseite des Messkapselgehäuses (30) ringförmig ausgebildet ist.

5. Durchflussmengenmesser nach Anspruch 3 oder Anspruch 4, **dadurch gekennzeichnet, dass**
der zweite Ultraschallwandler (51) am unteren Ende des Messkapselgehäuses (30) ringförmig ausgebildet ist und mit dem ersten Ultraschallwandler (50) an der Oberseite des Messkapselgehäuses (30) koaxial angeordnet ist.

6. Durchflussmengenmesser nach einem der Ansprüche 3 bis 5, **dadurch gekennzeichnet, dass**
Ein Ultraschallwandler (52) an der Oberseite des Messkapselgehäuses (30) zentrisch angeordnet ist;
am Ende des Messkanals (42) ein Spiegelträger (70) in Form eines Dachkantprismas angeordnet ist;
auf den nach oben weisenden schrägen Flächen des Spiegelträgers (70) jeweils ein ebener Umlenkspiegel (71, 72) sitzt;
zwei Ultraschallwandler (52) im Bereich des unteren Endes des Messkanals (42) so angeordnet sind, dass die von den Umlenkspiegeln 71, 72 reflektierten Ultraschallsignale auf diese Ultraschallwandler (52) treffen.

7. Durchflussmengenmesser nach einem der vorhergehenden Ansprüche, **dadurch gekennzeichnet, dass** der Messkanal (42) die Form eines Zylinders hat.

8. Ultraschall-Durchflussmengenmesser nach einem der vorhergehenden Ansprüche, **dadurch gekennzeichnet, dass** die Ultraschallwandler (52) die Form einer runden Scheibe haben.

9. Durchflussmengenmesser nach einem der Ansprüche 2 bis 8, **dadurch gekennzeichnet, dass** in dem Messkapselgehäuse (30) ein zylindrischer Messkammereinsatz (40) sitzt;
der Messkammereinsatz (40) und das Messkapselgehäuse (30) koaxial sind;
die Innenwandung des Messkapselgehäuses (30) und die Außenwandung des Messkammereinsatzes (40) einen ringförmigen Einlasskanal (41) definieren.

10. Durchflussmengenmesser nach einem der vorhergehenden Ansprüche, **dadurch gekennzeichnet, dass** das Messkapselgehäuse (30) aus Metall, insbesondere Messing besteht.

11. Durchflussmengenmesser nach Anspruch 9 oder Anspruch 10, **dadurch gekennzeichnet, dass** der Messkammereinsatz (40) aus einem Kunststoff, der Ultraschall absorbiert, besteht.
